# EUROPEAN PATENT APPLICATION

(11) **EP 2 651 144 A1**
(43) Date of publication of application: **16.10.2013**
(21) Application number: 13160888.7
(22) Date of filing: 25.03.2013
(51) Int. Cl.: H04N 21/422, H04N 21/41, H04N 5/44

(54) **Display apparatus, peripheral devices, remote controller and control method thereof**

(30) Priority: 13.04.2012 KR 20120038315
(71) Applicant: Samsung Electronics Co., Ltd., Gyeonggi-do 443-742 (KR)
(72) Inventor: Na, Moon-sung, Gyeonggi-do (KR); Yang, Geun-sam, Gyeonggi-do (KR); Lee, Seung-Bok, Gyeonggi-do (KR)
(74) Representative: Brandon, Paul Laurence

(57) **Abstract**

Disclosed are a display apparatus (1), a remote controller (3) and a control method thereof. The display apparatus (1) includes a connector (11) which is connectable to a plurality of peripheral devices (2); an image processor (12) which processes an image signal supplied by the peripheral devices 2); a display (13) which displays an image thereon based on the image signal; a communicator (142) which communicates with a remote controller (3) controlling the plurality of peripheral devices (2); and a controller (15) which selects one of the plurality of peripheral devices (2) to display the image according to a user's input transmitted by the remote controller (3) and transmits to the remote controller (3) remote control information of the selected peripheral device (2).

## Description

### BACKGROUND

### 1. Field

Apparatuses and methods consistent with the exemplary embodiments relate to a display apparatus, a remote controller and a control method thereof, and more particularly, to a display apparatus which is connectable to a plurality of peripheral devices, a remote controller and a control method thereof.

### 2. Description of the Related Art

A display apparatus such as a TV receives an image signal from a peripheral device such as a set-top box or a DVD player, and displays an image based on the received image signal.

The display apparatus may be remotely controlled by a user's input which is received through a remote controller. Such remote controller may be used exclusively for the display apparatus but also include a so-called universal remote controller which remotely controls a peripheral device.

If the display apparatus is connected to a plurality of peripheral devices, one of the peripheral devices should be selected to display an image and such selection may be performed by a user' input through the remote controller.

However, in a conventional art, even if the peripheral device is selected to display an image from the display apparatus, such peripheral device should also be selected from the remote controller to remotely control the peripheral device through the remote controller.

Thus, a user should repetitively select the same peripheral device from the display apparatus and the remote controller, suffering inconvenience in use.

### SUMMARY

Accordingly, one or more exemplary embodiments provide a display apparatus, a remote controller and a control method thereof which includes a display apparatus connectable to a plurality of peripheral devices, and a remote controller which enables a user to select the peripheral devices more conveniently.

The foregoing and/or other aspects may be achieved by providing a display apparatus including: a connector which is connectable to a plurality of peripheral devices; an image processor which processes an image signal supplied by the peripheral devices; a display which displays an image thereon based on the image signal; a communicator which communicates with a remote controller controlling the plurality of peripheral devices; and a controller which selects one of the plurality of peripheral devices to display the image according to a user's input transmitted by the remote controller and transmits to the remote controller remote control information of the selected peripheral device.

The remote control information of the selected peripheral device may include remote controller code information for remotely controlling the selected peripheral device.

The controller may receive the remote controller code information from the corresponding peripheral device.

The controller may receive the remote controller code information from a server through a network.

The display apparatus may further include a storage, wherein the controller may store in the storage remote control information of the peripheral device when the peripheral device is connected to the display apparatus.

The controller may control the display to display thereon a graphic user interface (GUI) to select the peripheral device and control the selection of the peripheral device through the GUI.

The foregoing and/or other aspects may also be achieved by providing a control method of a display apparatus which is connectable to a plurality of peripheral devices, the control method including: selecting one of the plurality of peripheral devices to display an image in the display apparatus, according to a user's input which is transmitted by a remote controller controlling the plurality of peripheral devices; and displaying an image based on an image signal transmitted by the selected peripheral device and transmitting to the remote controller remote control information of the selected peripheral device.

The remote control information of the selected peripheral device may include remote controller code information for remotely controlling the selected peripheral device.

The control method may further include receiving the remote controller code information from the corresponding peripheral device.

The control method may further include receiving the remote controller code information from a server through a network.

The control method may further include storing in a storage the remote control information of the connected peripheral device if the peripheral device is connected.

The selecting of one of the plurality of peripheral devices may include displaying a graphic user interface (GUI) which is provided to select the peripheral device and selecting the one of the peripheral devices through the GUI.

The foregoing and/or other aspects may also be achieved by providing a remote controller of a display apparatus which is connectable to a plurality of peripheral devices, the remote controller including: a communicator which communicates with the display apparatus and the plurality of peripheral devices; and a controller which transmits to the display apparatus a user's input to select one of the plurality of peripheral devices to display an image, receives remote control information of the selected peripheral device from the display apparatus, and transmits to the selected peripheral device the user's input to remotely control the selected peripheral device based on the received remote control information of the peripheral device.

The remote control information of the selected peripheral device may include remote controller code information to remotely control the selected peripheral device.

The foregoing and/or other aspects may also be achieved by providing a control method of a remote controller of a display apparatus which is connectable to a plurality of peripheral devices, the control method including: transmitting to the display apparatus a user's input to select one of the plurality of peripheral devices to display an image; receiving remote control information of the selected peripheral device from the display apparatus; and transmitting to the selected peripheral device the user's input to remotely control the selected peripheral device based on the received remote control information of the peripheral device.

The remote control information of the selected peripheral device may include remote controller code information to remotely control the selected peripheral device.

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 is a block diagram of a display apparatus, a remote controller and a peripheral device according to an exemplary embodiment;
FIG. 2 is a block diagram of the display apparatus shown in FIG. 1;
FIG. 3 is a block diagram of the remote controller shown in FIG. 1;
FIG. 4 is a flowchart showing a control method of the display apparatus shown in FIG. 2;
FIG. 5 is a flowchart showing another control method of the display apparatus shown in FIG. 2;
FIG. 6 illustrates an example of a graphic user interface (GUI) which is provided to select a peripheral device and displayed by the display apparatus shown in FIG. 2;
FIG. 7 is a flowchart showing an operation of securing information to remotely control the peripheral device by the display apparatus shown in FIG. 2;
FIG. 8 is a flowchart showing a control method of the remote controller shown in FIG. 3;
FIG. 9 illustrates an example of setting a remote controller code according to a selection of the peripheral device performed by the remote controller shown in FIG. 3; and
FIG. 10 illustrates a display apparatus and a remote controller according to another exemplary embodiment.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

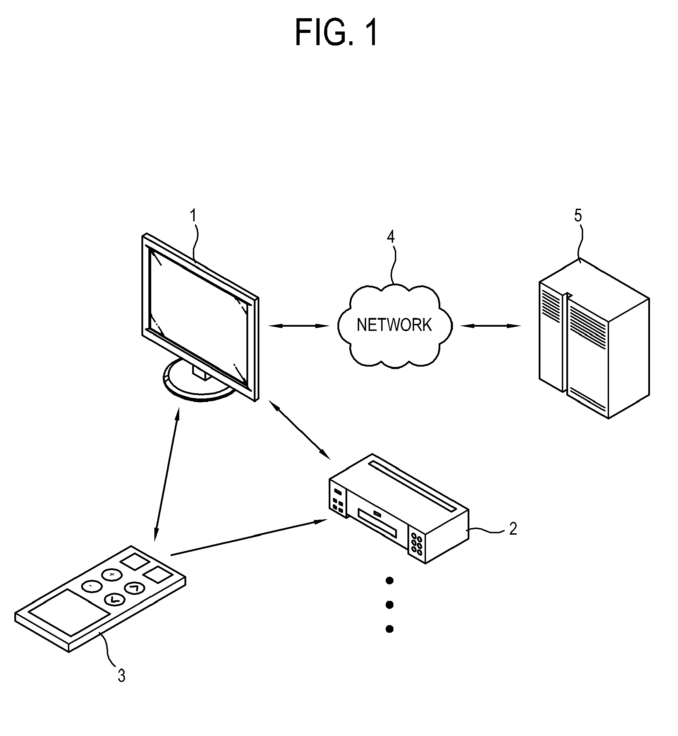

FIG. 1 is a block diagram of a display apparatus, a remote controller and a peripheral device according to an exemplary embodiment. A display apparatus 1 may include a TV, and displays an image based on an image signal. The display apparatus 1 may be connected to a peripheral device 2, and receive an image signal from the peripheral device 2. The peripheral device 2 may include a TV set-top box, a DVD player, a BD player, an AV receiver, a home theater, a game console, etc. which may supply an image signal. The display apparatus 1 is connected to a plurality of peripheral devices 2.

The display apparatus 1 may be controlled by a remote controller 3. The remote controller 3 receives and transmits to the display apparatus 1 a user's input regarding a control of the display apparatus 1. The display apparatus 1 performs an operation according to a user's input transmitted by the remote controller 3. For example, a user may select one of the plurality of peripheral devices 2, to display an image on the display apparatus 1, through the remote controller 3. The display apparatus 1 may set a device input with respect to the peripheral device 2 selected by the user's input and display an image from the peripheral device 2. The remote controller 3 may control an operation of the peripheral device 2 according to a user's input. For example, a user may control the operation of the peripheral device 2 for which the device input is set, through the remote controller 3.

The display apparatus 1 selects one of the plurality of peripheral devices 2, to display an image on the display apparatus 1, according to a user's input transmitted by the remote controller 3, and the display apparatus 1 transmits to the remote controller 3 remote control information of the selected peripheral device 2. The remote control information of the selected peripheral device 2, transmitted by the display apparatus 1 to the remote controller 3, includes, e.g., remote controller code information to remotely control the selected peripheral device 2. The remote controller 3 performs a remote control setting consistent with the selected peripheral device 2 based on the remote control information of the peripheral device 2 transmitted by the display apparatus 1. For example, the remote controller 3 may set the remote controller code of a remote control signal to be transmitted, to be consistent with the selected peripheral device 2 from the display apparatus 1 based on the received remote control information of the peripheral device 2. Upon user's input, the remote controller 3 may transmit a remote controller signal corresponding to such user's input according to the remote controller setting and remotely control the peripheral device 2 currently selected by the display apparatus 1.

As noted above a user may select the peripheral device 2 using the remote controller 3, and the display apparatus 1 transmits remote control information of the selected peripheral device 2 to the remote controller 3. Accordingly, by simply selecting the peripheral device 2 with the remote controller 3, the remote controller 3 is programmed , simplifying the programming process.

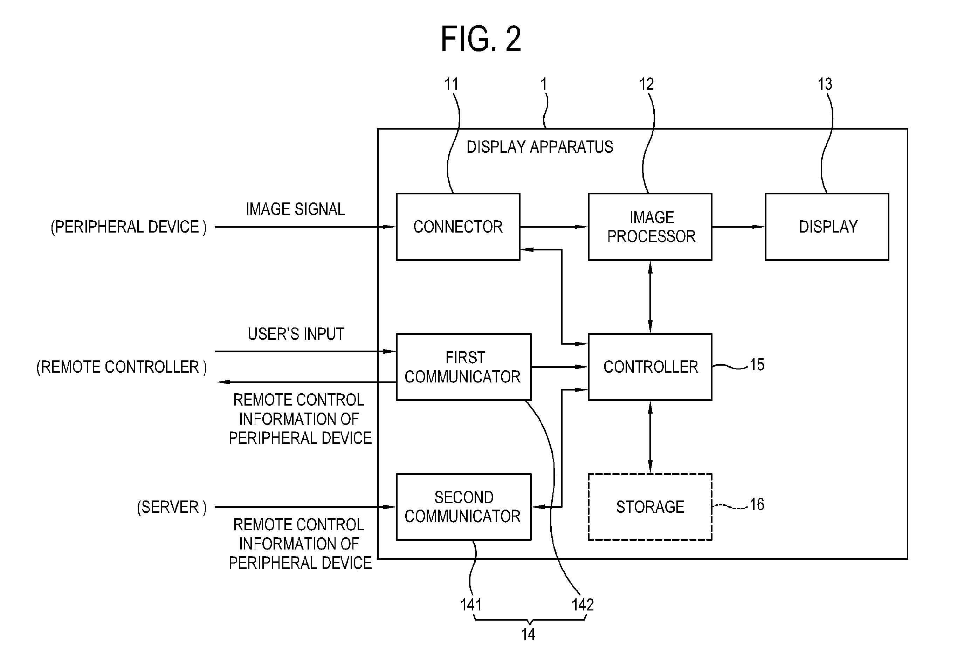

FIG. 2 is a block diagram of the display apparatus 1 shown in FIG. 1. The display apparatus 1 includes a connector 11, an image processor 12, a display 13, a communicator 14 and a controller 15. The connector 11 is connected to the peripheral device 2. The connector 11 and the peripheral device 2 may be connected to each other in a wired or wireless manner. The connector 11 receives an image signal from the peripheral device 2. The communicator 14 may include a first communicator 142 and a second communicator 141.

The image processor 12 processes an image to be displayed, based on an image signal transmitted through the connector 11. The image processor 12 may process a graphic user interface (GUI) for display, which is provided to select the peripheral device 2. The display 13 displays thereon an image and/or GUI processed by the image processor 12. The display 13 includes a display element such as a liquid crystal display (LCD) or an organic light emitting diode (OLED).

The first communicator 142 communicates with the remote controller 3. The second communicator 141 communicates with the server 5 or the network 4 from which it retrieves information such as, the remote control information of the peripheral device 2. The first communicator 142 and the remote controller 3 communicate with each other in a wireless manner, but it is noted that the communication method between the elements of the system is not limited thereto and other communications methods may be used. The first communicator 142 receives from the remote controller 3 a remote controller signal corresponding to a user's input to remotely control the display apparatus 1. The first communicator 142 transmits to the remote controller 3 remote control information of the peripheral device 2.

The controller 15 controls the display apparatus 1 as a whole. The controller 15 selects one of the plurality of peripheral devices 2 to display an image on the display apparatus 1 according to a user's input transmitted by the remote controller 3, and transmits to the remote controller 3 the remote control information of the selected peripheral device 2. The controller 15 may include a non-volatile memory (not shown) to store therein a control program to perform the foregoing control operation, a volatile memory (not shown) to load at least a part of the stored control program, and a microprocessor (not shown) to execute the loaded control program.

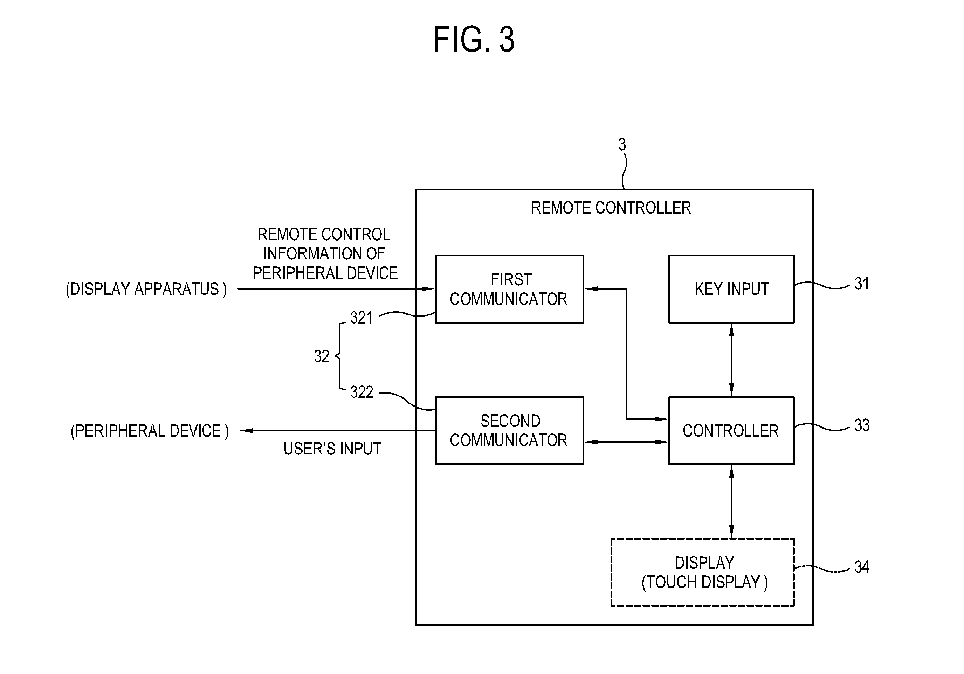

FIG. 3 is a block diagram of the remote controller 3 shown in FIG. 1. The remote controller 3 includes a key input 31, a communicator 32 and a controller 33. The key input 31 includes a plurality of keys to receive a user's input. The communicator 32 may include a first communicator 321 and a second communicator 322. The first communicator 321 communicates with the first communicator 142 of the display apparatus 1, and the second communicator 322 communicates with the peripheral device 2. For example, the first communicator 321 may communicate with the first communicator 142 of the display apparatus 1 in a radio frequency (RF) communication, and the second communicator 322 may communicate with the peripheral device 2 in an infrared (IR) communication. However, it is noted that these types of communications are merely exemplary and other types of communications between the various elements can also be utilized. The first and second communicators 321 and 322 transmit a remote controller signal corresponding to a user's input received through the key input 31.

The controller 33 controls the remote controller 3 as a whole. The controller 33 transmits to the display apparatus 1 a user's input to select one of the plurality of peripheral devices 2 to display an image, receives from the display apparatus 1 the remote control information of the selected peripheral device 2, and transmits to the selected peripheral device 2 the user's input to remotely control the peripheral device 2 selected based on the received remote control information of the peripheral device 2. The controller 33 may include a non-volatile memory (not shown) to store therein a control program to perform the foregoing control operation, a volatile memory (not shown) to load at least a part of the stored control program, and a microprocessor (not shown) to execute the loaded control program.

The remote controller 3 may further include a display 34 to display thereon a GUI to receive a user's input. The display 34 may be realized as a touch display, and includes a touch sensor (not shown) to detect a user's touch input through the GUI and transmits the detected user's touch input to the controller 33.

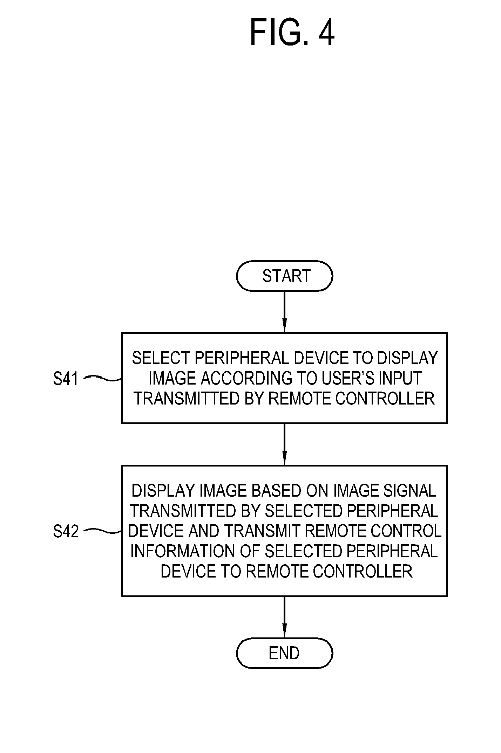

FIG. 4 is a flowchart showing a control method of the display apparatus 1 shown in FIG. 2. At operation S41, the display apparatus 1 selects the peripheral device 2 to display an image on the display apparatus 1, according to a user's input transmitted by the remote controller 3. The display apparatus 1 displays the image based on an image signal transmitted by the selected peripheral device 2, and transmits to the remote controller 3 the remote control information of the selected peripheral device 2.

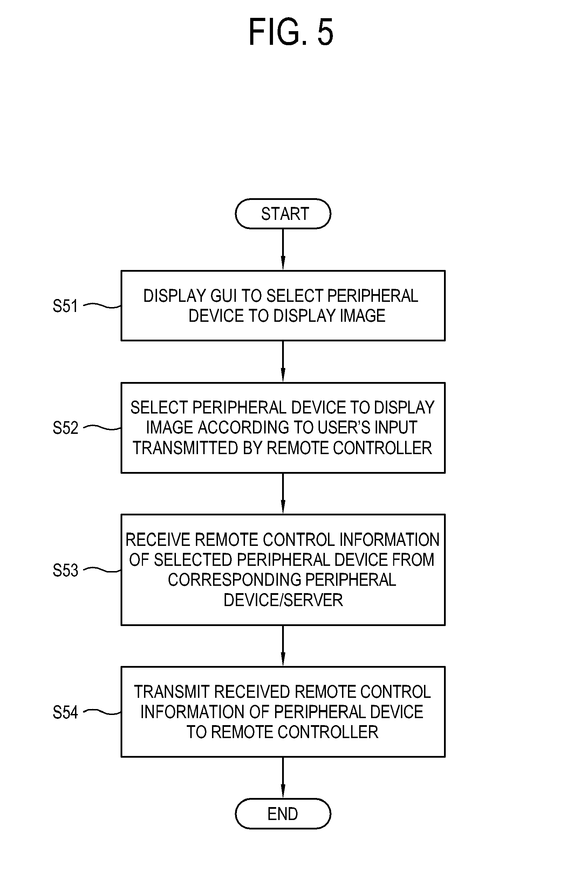

FIG. 5 is a flowchart showing another control method of the display apparatus 1 shown in FIG. 2. At operation S51, the display apparatus 1 displays a GUI to select the peripheral device to display an image on the display apparatus 1.

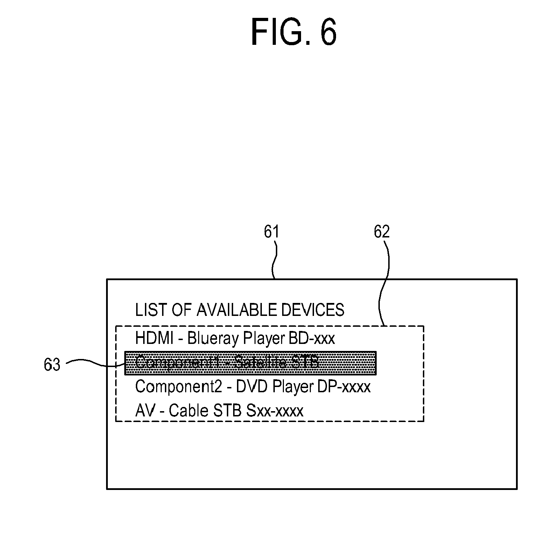

FIG. 6 illustrates an example of a GUI which is provided to select the peripheral device 2. A GUI 61 includes an item 62 showing a list of available peripheral devices 2. The display apparatus 1 may display as the item 62 the list of available peripheral devices 2. The item 62 may include an input method and/or name of the peripheral devices 2. A user may select one of the peripheral devices 2 from the list of peripheral devices 2 indicated as the item 62 to display an image. The display apparatus 1 may highlight (refer to reference numeral 63) one of the plurality of items 62 for a user to select the peripheral device 2, and move such highlight 63 according to a user's input.

Returning to FIG. 5, at operation S52, the display apparatus 1 selects the peripheral device 2 to display an image on the display apparatus 1, according to a user's input transmitted by the remote controller 3. At operation S53, the display apparatus 1 receives the remote control information of the selected peripheral device 2 from the corresponding peripheral device 2 or an external server (refer to reference numeral 5 in FIG. 1). According to another exemplary embodiment, if the display apparatus 1 already has the remote control information of the selected peripheral device 2, the operation S53 may be omitted.

The remote control information of the peripheral device 2 includes remote controller code information which is necessary for the remote controller 3 to remotely control the peripheral device 2. The display apparatus 1 may secure the remote control information of the peripheral device 2 when the peripheral device 2 is initially connected to the display apparatus 1.

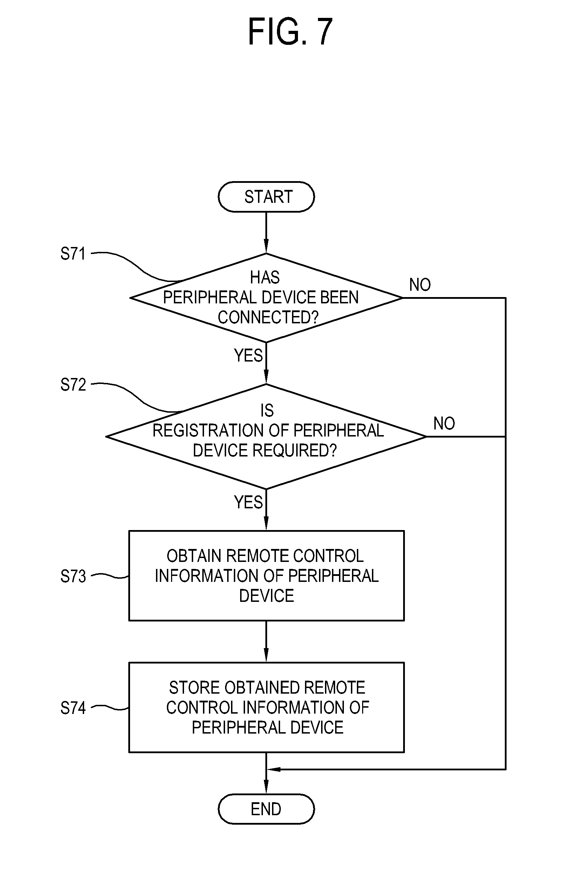

FIG. 7 is a flowchart showing an operation of securing the remote controller information of the peripheral device 2.

As shown therein, at operation S71, the display apparatus 1 identifies whether the peripheral device 2 is connected thereto. If the peripheral device 2 is connected to the display apparatus 1, the display apparatus 1 identifies whether the peripheral device 2 should be registered, at operation S72. If the display apparatus 1 does not have the remote control information of the connected peripheral device 2, the display apparatus 1 determines that the registration of the peripheral device 2 is necessary. As shown in FIG. 2, the display apparatus 1 may further include a storage 16 to store therein the remote control information of the connected peripheral device 2. If the remote control information of the connected peripheral device 2 is stored in the storage 16, the display apparatus 1 determines that it has secured the remote control information of the connected peripheral device 2.

If the registration of the peripheral device 2 is required, the display apparatus 1 obtains the remote control information of the connected peripheral device 2 at operation S73. The display apparatus 1 may obtain the remote control information of the peripheral device 2 from the connected peripheral device 2 or the server 5 connected through the network 4. If the registration of the peripheral device 2 is required, the display apparatus 1 may display a message to inform a user of the foregoing, confirm whether a user desires to register the peripheral device 2 and perform the registration of the peripheral device 2. At operation S74, the display apparatus 1 stores in the storage 16 the obtained remote control information of the peripheral device 2 to register the peripheral device 2.

Returning to FIG. 5, at operation S54, the display apparatus 1 transmits to the remote controller 3 the received remote control information of the peripheral device 2. According to another exemplary embodiment, if the peripheral device 2 has already been registered, the display apparatus 1 may transmit to the remote controller 3 the remote control information of the peripheral device 2 which is stored in the storage 16.

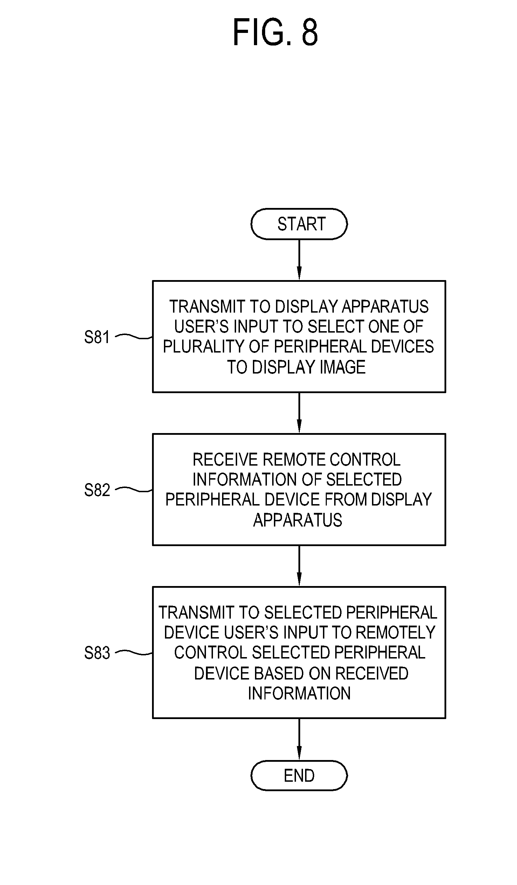

FIG. 8 is a flowchart showing a control method of the remote controller 3 shown in FIG. 3. At operation S81, the remote controller 3 transmits to the display apparatus 1 a remote controller signal corresponding to a user's input to select one of the plurality of peripheral devices 2 to display an image. The operation S81 may be performed corresponding to the operation S52 of the display apparatus 1 in FIG. 5 (operation of selecting the peripheral device according to a user's input).

At operation S82, the remote controller 3 receives the remote control information of the selected peripheral device 2 from the display apparatus 1. At operation S83, the remote controller 3 transmits to the selected peripheral device 2 the user's input to remotely control the selected peripheral device 2 based on the received remote control information of the peripheral device 2. More specifically, the remote controller 3 changes the remote control setting based on the received remote control information of the peripheral device 2. For example, the remote controller 3 sets the remote controller code for the remote control operation as a remote control code of the selected peripheral device 2.

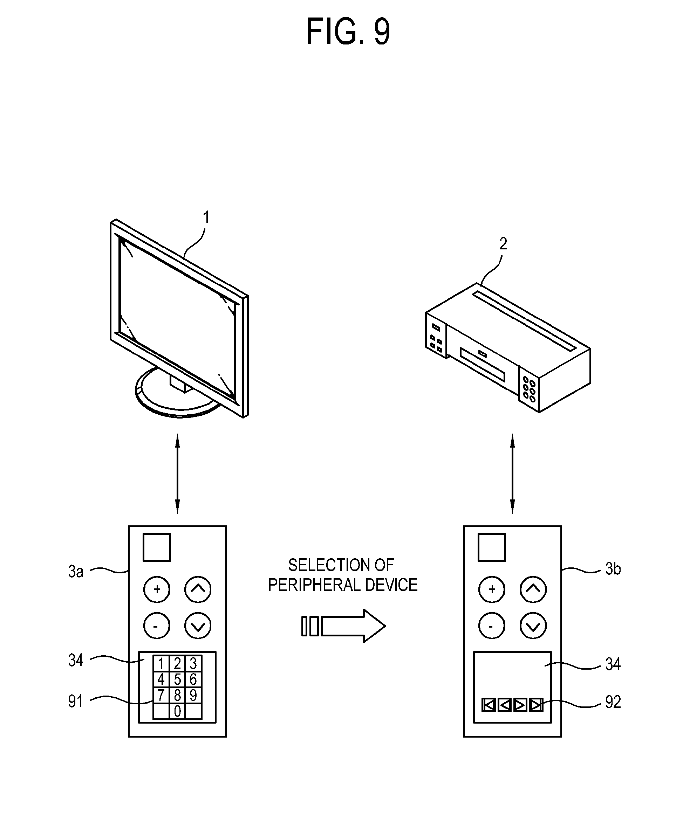

FIG. 9 illustrates an example of a remote controller setting according to the selection of the peripheral device 2 by the remote controller 3. The left side in FIG. 9 illustrates the situation where a remote controller 3a remotely controls the display apparatus 1 prior to the selection of the peripheral device 2, and the right side in FIG. 9 illustrates the situation where a remote controller 3b remotely controls the selected peripheral device 2 after the selection of the peripheral device 2.

As shown therein, prior to the selection of the peripheral device 2, a GUI 91 is displayed on the display 34 of the remote controller 3a corresponding to the reception of the user's input to remotely control the display apparatus 1. After the selection of the peripheral device 2, a GUI 92 is displayed on the display 34 of the remote controller 3b corresponding to the reception of the user's input to remotely control the selected peripheral device 2. A user may input a manipulation through the GUI 92 to remotely control the selected peripheral device 2. The remote controller 3b transmits a remote controller signal corresponding to the user's input transmitted through the GUI 92 to operate the peripheral device 2 according to the user's input.

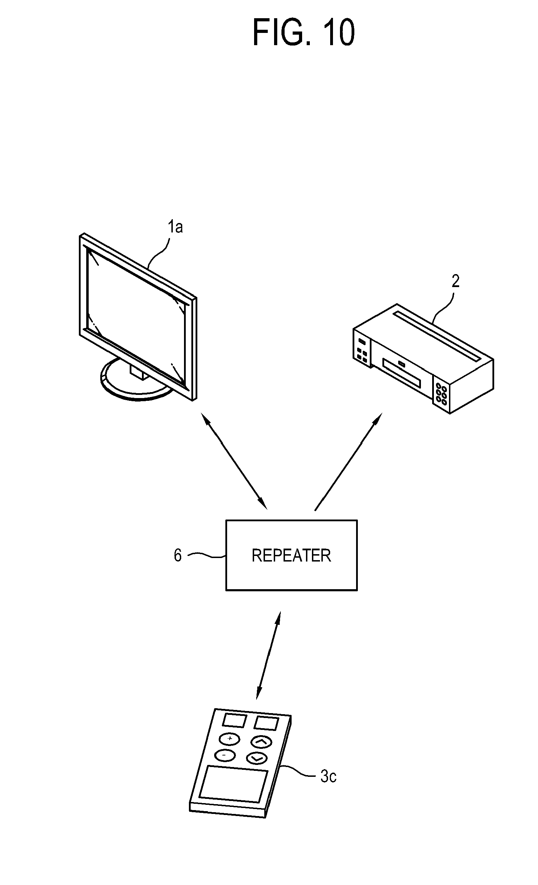

FIG. 10 illustrates a display apparatus 1a and a remote controller 3c according to another exemplary embodiment. According to the present exemplary embodiment, a repeater 6 is provided between the display apparatus 1a and the remote controller 3c. The repeater 6 may include a wireless transmitter/receiver (not shown) and an IR transmitter (not shown). The wireless transmitter/receiver of the repeater 6 relays communication between the display apparatus 1a and the remote controller 3c. That is, the wireless transmitter/receiver transmits a remote control signal to the display apparatus 1a corresponding to a user's input transmitted by the remote controller 3c. The wireless transmitter/receiver of the repeater 6 transmits to the remote controller 3c the remote control information of the selected peripheral device 2 that is transmitted by the display apparatus 1a. The wireless transmitter/receiver of the repeater 6 receives from the remote controller 3c a remote control signal corresponding to a user's input to remotely control the peripheral device 2. The IR transmitter of the repeater 6 retransmits the remote controller signal corresponding to the user's input to remotely control the peripheral device 2 that is transmitted by the remote controller 3c to thereby operate the peripheral device 2 according to a user's input.

As described above, a display apparatus, a remote controller and a control method thereof enable a user to select a peripheral device more conveniently.

Although a few exemplary embodiments have been shown and described, it will be appreciated by those skilled in the art that changes may be made in these exemplary embodiments without departing from the principles and spirit of the inventive concept, the range of which is defined in the appended claims and their equivalents.

## Claims

1. A display apparatus comprising:
a connector which is connectable to a plurality of peripheral devices;
an image processor which processes an image signal supplied by the plurality of peripheral devices;
a display which displays an image thereon based on the image signal supplied by the plurality of peripheral devices;
a communicator which communicates with a remote controller controlling the plurality of peripheral devices; and
a controller which selects one of the plurality of peripheral devices to display the image according to a user's input transmitted by the remote controller and transmits to the remote controller remote control information of the selected peripheral device.

2. The display apparatus according to claim 1, wherein the remote control information of the selected peripheral device comprises remote controller code information for remotely controlling the selected peripheral device.

3. The display apparatus according to claim 2, wherein the controller receives the remote controller code information from the selected peripheral device.

4. The display apparatus according to claim 2, wherein the controller receives the remote controller code information from a server through a network.

5. The display apparatus according to one of claims 1 to 4, further comprising a storage, wherein
the controller stores in the storage remote control information of the selected peripheral device when the selected peripheral device is connected to the display apparatus.

6. The display apparatus according to one of claims 1 to 5, wherein the controller controls the display to display thereon a graphic user interface (GUI) to select one of the plurality of peripheral devices and controls the selection of one of the plurality of peripheral devices through the GUI.

7. A control method of a display apparatus which is connectable to a plurality of peripheral devices, the control method comprising:
selecting one of the plurality of peripheral devices to display an image in the display apparatus, according to a user's input which is transmitted by a remote controller controlling the plurality of peripheral devices; and
displaying an image based on an image signal transmitted by the selected peripheral device and transmitting to the remote controller remote control information of the selected peripheral device.

8. The control method according to claim 7, wherein the remote control information of the selected peripheral device comprises remote controller code information for remotely controlling the selected peripheral device.

9. The control method according to claim 8, further comprising:
receiving the remote controller code information from the selected peripheral device.

10. The control method according to claim 8, further comprising:
receiving the remote controller code information from a server through a network.

11. The control method according to one of claims 7 to 10, further comprising:
storing in a storage the remote control information of the selected peripheral device if the selected peripheral device is connected.

12. The control method according to one of claim 7 to 11, wherein the selecting of one of the peripheral devices comprises displaying a graphic user interface (GUI) which is provided to select the peripheral device and selecting the peripheral device through the GUI.

13. A remote controller of a display apparatus which is connectable to a plurality of peripheral devices, the remote controller comprising:
a communicator which communicates with the display apparatus and the plurality of peripheral devices; and
a controller which transmits to the display apparatus a user's input to select one of the plurality of peripheral devices to display an image, receives remote control information of the selected peripheral device from the display apparatus, and transmits to the selected peripheral device the user's input to remotely control the selected peripheral device based on the received remote control information of the selected peripheral device.

14. The remote controller according to claim 13, wherein the remote control information of the selected peripheral device comprises remote controller code information to remotely control the selected peripheral device.

15. A control method of a remote controller of a display apparatus which is connectable to a plurality of peripheral devices, the control method comprising:
transmitting to the display apparatus a user's input to select one of the plurality of peripheral devices to display an image;
receiving remote control information of the selected peripheral device from the display apparatus; and
transmitting to the selected peripheral device the user's input to remotely control the selected peripheral device based on the received remote control information of the peripheral device.
